# EUROPEAN PATENT SPECIFICATION

(11) **EP 0 461 348 B1**
(45) Date of publication and mention of the grant of the patent: **27.07.1994**
(21) Application number: 91103591.3
(22) Date of filing: 08.03.1991
(51) Int. Cl.: B65G 47/46

(54) **Unit for sorting and distributing packages like parcels or similar packages**
Sortier- und Verteilungseinrichtung für Pakete oder ähnliche Packungen
Installation pour trier et distribuer des paquets ou emballages similaires

(30) Priority: 13.06.1990 IT 2063590
(43) Date of publication of application: 18.12.1991
(73) Proprietor: Canziani, Francesco, I-21010 San Macario (Varese) (IT)
(72) Inventor: Canziani, Francesco, I-21010 San Macario (Varese) (IT)
(74) Representative: La Ciura, Salvatore

(56) References cited:
- DE-A- 2 030 515
- GB-A- 2 197 633

## Description

The present invention proposes a unit for the sorting and distribution of packages like parcels and other such items. This invention includes the features defined in the independent claim 1.

Sorting apparatuses including trollies which move along a fixed path equipped with means to execute the unloading of transported packages are already well-known, e.g. from US 4.712.965 and G.B 2.197.633, by the same applicant.

US 4 712 965 described a plant including a line along which a large number of trollies move, each powered by its own motor and each provided with a rotating mat devised to execute the unloading of transported packages along the line. In this type of unit the collection devices for the unloaded packages are constituted by shutes or by containers, one alongside the other.

G.B. 2 197 633 relates to a sorting apparatus, wherein the discharge unit is mounted above the carriage and the telescopic means lift this unit, to position it at a discharge level. The preamble of claim 1 is based on this document. However, this embodiment may cause problems of instability, when the discharge level is at a high position.

The application for an english patent no. 2.197.633A by the same applicant, describes a sorting apparatus of a synchronous" type, that is of the type that includes a large number of trollies engaged one with the other and which move along a fixed path, operated by means of a belt or chains, or analogous system.

In the apparatus referring to the patent application no. 2.197.633 each trolley is equipped with a transport device mouted on a pantograph support which permits the raising of the transport base thus enabling unloading at two different heights.

This positioning occurs either engaging a series of cams arranged along the line and which interact with devices mouted on the trolley, or by way of motors mouted on each trolley which permit the raising of transport base.

This solution, however, presents a number of inconveniences and limitations. Above all it necessitates recourse to quite complicated structures which consequently are heavy and expensive and causing a limitation of the load to be raised by the transport bases, unless use is made of particularly rigid structures which would in turn contribute to making the whole machine even heavier. For the reasons outlined above this type of apparatus is better adapted to plants with a high yield, but with a limited number of collection points, whereas it is less suited to those situations where the packages to be sorted, in numbers not excessively high, must nevertheless be directed to numerous collection points.

For example a typical case where this situation occurs is that found in large offices, for example government offices or banks, where the quantity of mail is not excessive, but where different parcels must be directed to a large number of addressees.

There is therefore a real need for a mechanism which allows one to sort packages like postal parcels and similar items, directing them to numerous collecting points, a mechanism which, however, is not bulky and which can be easily installed in existing localities.

Preferably this mechanism should be able to unload the parcels in collection receivers distributed on different floors,(at different heights) it should be light, thereby allowing installation on the upper floors of a building, it should be reliable and safe and be easily accessible for maintenance work.

To resolve the indicated problem the present invention proposes a unit for the sorting and distribution of packages like parcels and similar items according to claim 1.

The present invention will now be described in detail, as an unlimited example, with particular reference to the figures attached in which:
- figure 1 is the view from above of a unit corresponding to the invention;
- figure 2 is the lateral view of a unit corresponding to the invention;
- figure 3 is the raised view of a particular aspect of the unit;

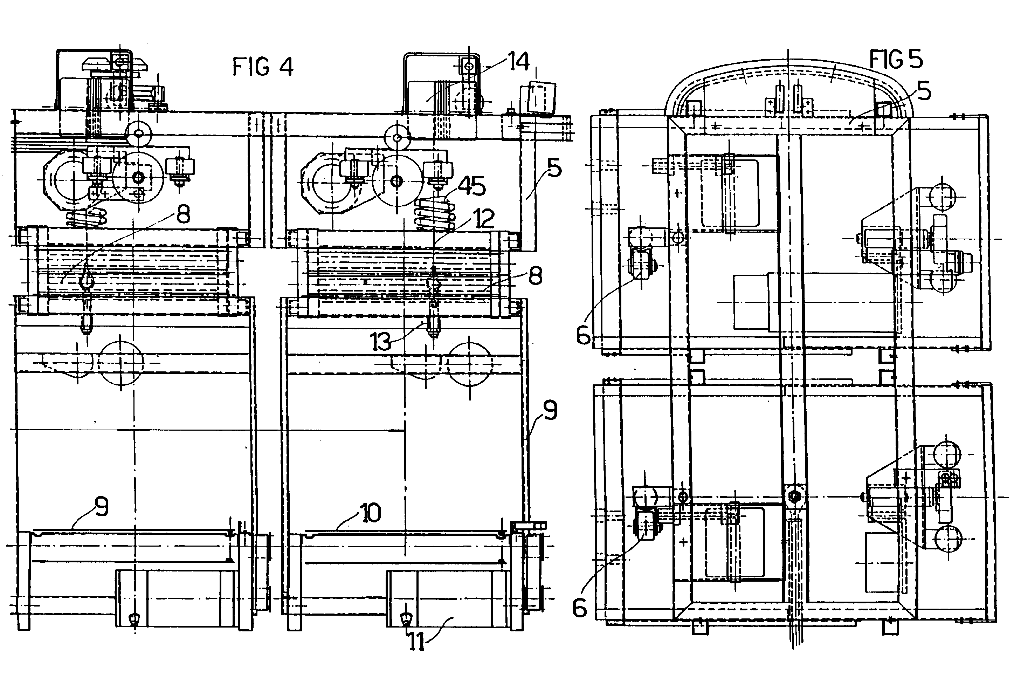

- figures 4 and 5 are respectively the lateral and superior view of a pair of trollies and related cells;
- figures 6 and 7 illustrate, partially in section, the control mechanisms for the height positioning of the cells;
- figure 8 is a raised schematic view of a trolley with the related cell at the loading station;
- figure 9 is a block design of the electronic control mechanisms of a group of trollies.

The unit according to the invention includes a fixed line 1 along which the trollies move, a station 2 for codification and loading of the packages to be sorted and a large number of collection mechanisms, indicated together by 3, in which the packages are unloaded.

Along the line 1 the trollies move, drawing power by means of sliding contacts, from power supply bars of a known type arranged in parallel with the rails 1.

By means of analogous power supply bars signals are also sent, by a central computer which directs the functions of the whole unit, for control of the various trolley functions.

The rails 1 are mounted on a structure composed of a large number of posts 4 positioned preferably at a height which permits the passage of persons below the trollies.

The trollies can be disconnected from the others or regrouped in more groups each including a certain number of trollies hooked to each other and this for reasons of economy, in so far as the electronic control apparatuses mounted on board the trollies are capable, each one, of controlling the functions of several elements.

For example, more series can be planned, each comprising a certain number of trollies hooked to each other.

In the following , the term 'boat' will be used to indicate each group of trollies linked between each other and directed by a single processor mounted on board one of them.

In the examples illustrated in the figures, a boat is indicated made up of trollies hooked to each other, on each one of which are mounted a pair of cells.

Each trolley is provided with wheels 6 which run along the rails 1. The movement is produced by a motor, illustratd in the figures, fed, as said, by power bars placed along the line. According to needs a motor can be provided on each trolley or a single motor for each boat.

On each trolley are mounted a pair of telescopic suports 8 preferibly of pantographic type, to each of which is fixed a support frame 9 for a rotating mat 10 set to rotate by a motor 11. The complex constituted by the frame 9 , by the mat 10 and by the related motor constitutes the cell into which are deposited the parcels to be sorted. Each cell is hooked to the extremity of a steel cable 12, by way of an interposing spring 13 the aim of which is to soften bumps and/or vibrations.

The cable 12 is wrapped around a winch 14 and there is provided a spiral 45 arranged around the steel cable 12 to power the motor 11.

By turning the winch 14, one unwinds to a greater or lesser extent the cable 12, making rise and fall the cell and positionig it at the desired height. To the winch 14 there is fixed a cam 15 which is engaged by a pivot 16 to an axle 17 mounted on to the frame 5 of the trolley. A helical spring 48 or similar item maintains the axle 17 in a position which conducts the pivot 16 to engage the cam 15 in order to keep the winch blocked 14. To the axle there is then fixed an arm 18 to the end of which is mounted a wheel 19, which is engaged by mechanisms present along the line, to unblock the winch 14 and permit the descent of the cell.

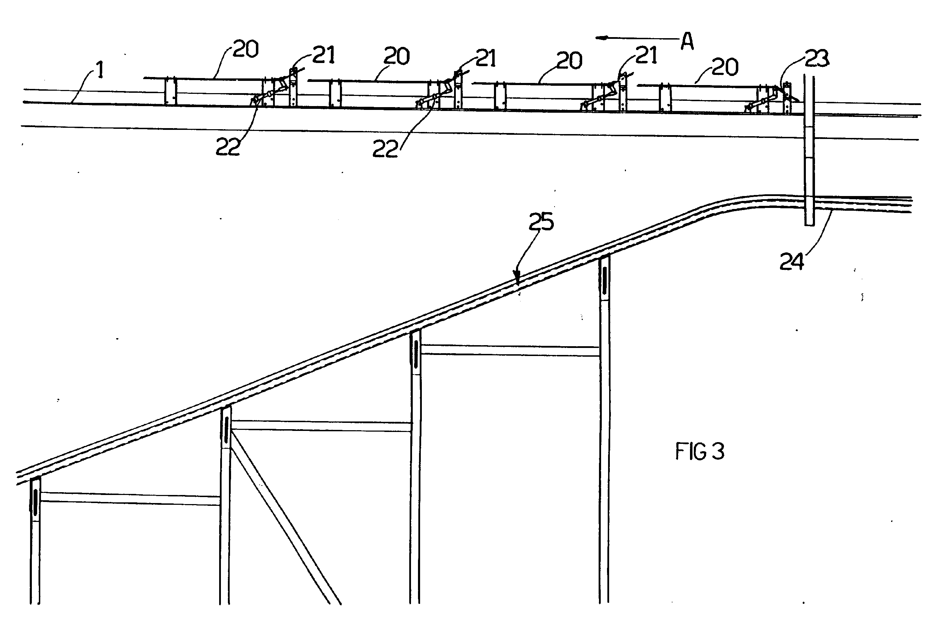

The mechanisms which engage the wheel 19 to command the descent controlled by the cell are constituted by a large number of deviators placed along the line and illustrated in figure 3.

In this figure there is represented a section of the line, corresponding to which the the positioning of the cells at the desired height for unloading occurs. In this area there is arranged above one of the rails 1, a second section of rail 20 interrupted by a series of deviators 21 moved by corresponding pneumatic pistons 22 or analogous systems.

Each of the pistons 22 acts as an arm attached to a deviator 21 to carry it to a position in which the deviator is aligned with the section of rail 20, guaranteeing its continuity, at a raised position illustrated in figure 3.

The direction of movement of the boat along the line is indicated, in figure 3, by arrow A.

At the beginning of the rail section 20 there is a head deviator 23, commanded by a pneumatic piston to move from a position aligned with the rails to a position inclined downwards, illustrated again in figure 3.

Always in this area there is provided, below the line 1, a guide 24, which can be constituted by a rail analogous to the preceding ones and on which runs an idling wheel mounted on the frame 9 of the cell. The rail 24 presents an inclined tract 25 which functions as a sort of guide for the cell during the descending movement.

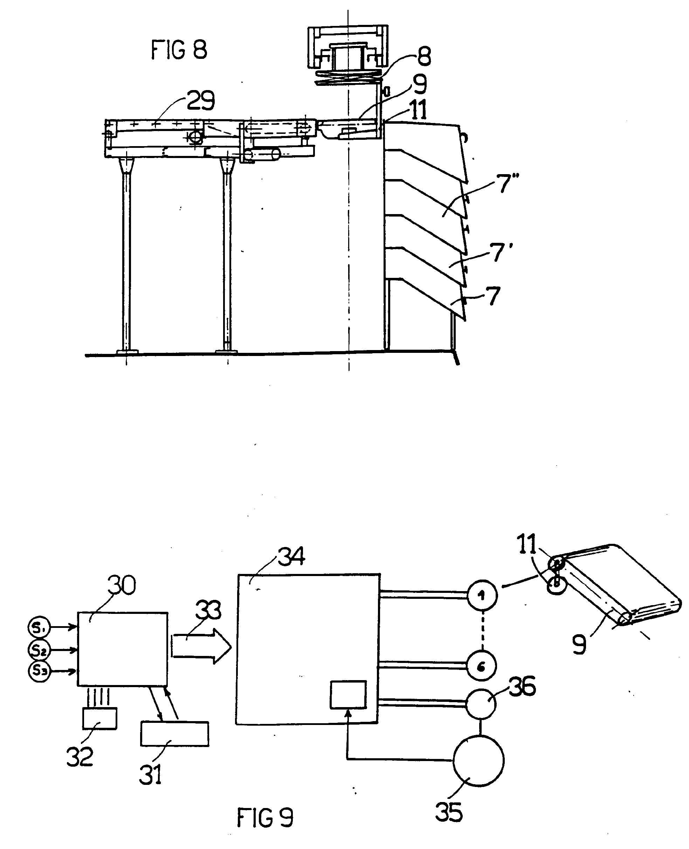

At the bottom of the section of line just described there are the collection mechanisms, constituted by a flanking series of shoots or containers 7, 7′, 7˝, etc. one above the other (figure 8).

The collection mechanisms for the sorted packages can be arranged according to individual needs and can be arranged on a varying number of levels, which can also be raised.

Arrangement and number of levels can be defined with reference to the dimensions and the type of package and operations which can be required at the bottom of the given mechanisms.

The principal advantage is given by the flexibility in the choice of the mechanism most adapted to the application. At the bottom of these collection mechanisms there is a device 26 made from a section of inclined rail along which a rotating mat moves set in motion by a motor 27.

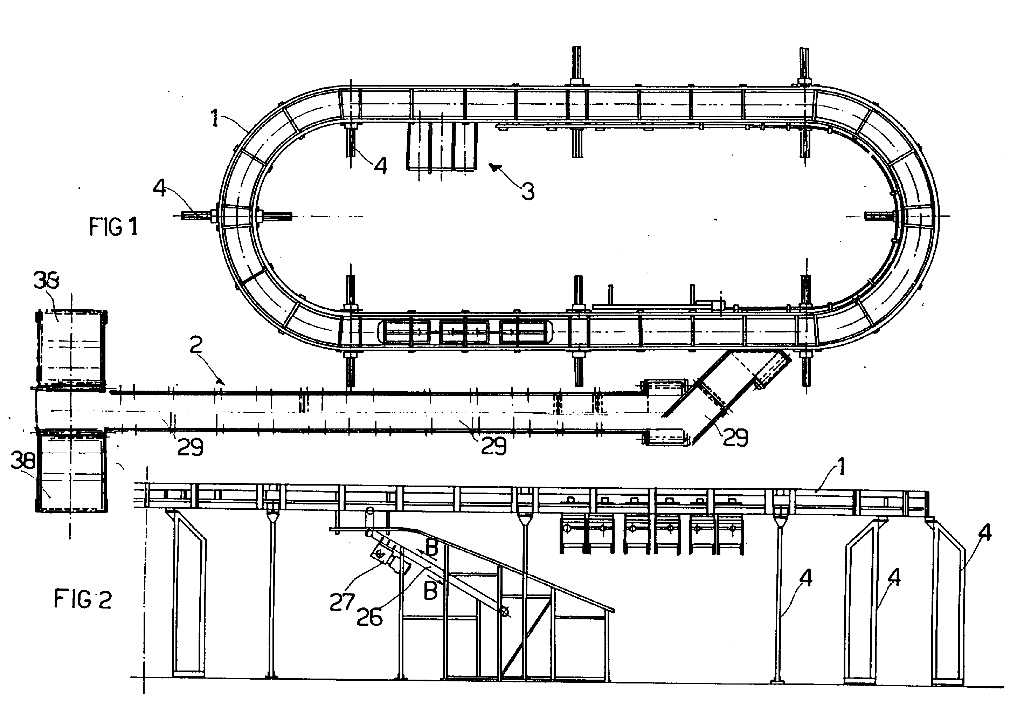

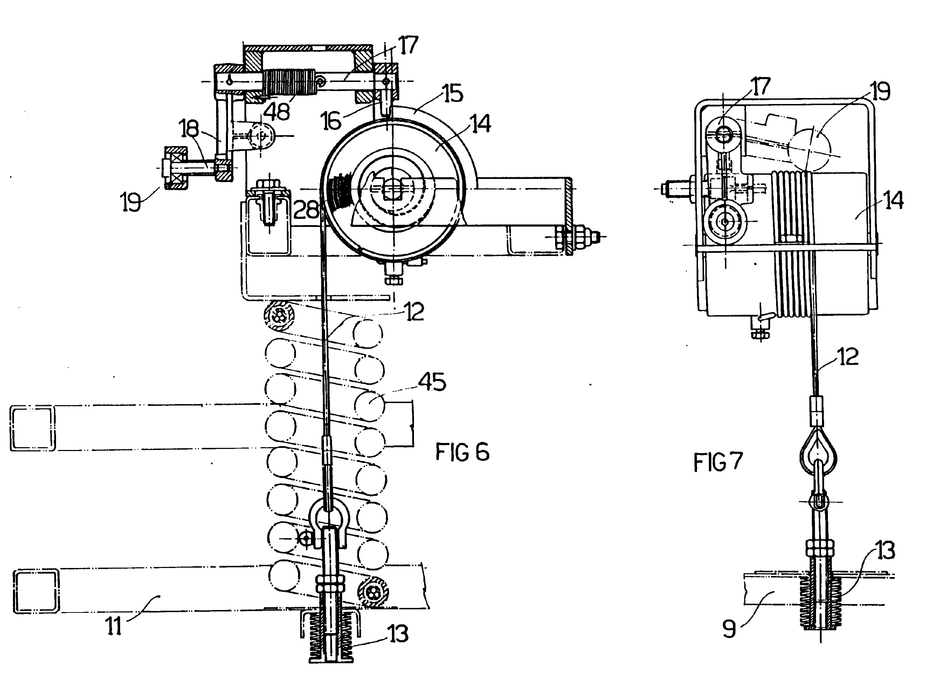

The mat moves in the direction of the arrows B in figure 2 and its aim is to carry the cell back to the raised starting postion. A spring 28 (figure 6) makes the winch 14 rotate in the direction of the rewinding of the cable 12.

The strength of the spring is such that it easily rewinds the cable around the winch, but not sufficient to sustain the weight of the cell.

The function occurs as follows: the parcels to be sorted, to which a destination code is assigned by an operator, for example by means of a control panel, an optic reading or other known system, are arranged on the belts 38 which carry them to a transporter constituted by a sequence of rotating mats 29, which unload each parcel in the cell assigned to it (fig.2; fig.8).

All these loading functions are well known and are therefore not described in detail.

On each boat that moves along the line 1 there is mounted a microcomputer comprising a CPU 30 (figure 9) which receives the command signals from the computer controlling the apparatus by means of a communication interface 31 linked to the central computer in the known way, for example by means of sliding contacts which engage bars arranged along the line, or by means of radio signals etc.

To each of the CPU mounted on the boats is assigned a particular identification code , appropriately engaging a series of bridges or microswitches present on a module 32.

The CPU is linked, by a BUS 33 to a module 34 which includes seven functions, six of which serve to control the mat functions 9 present on the cells related to this boat while the seventh controls the motor functions of the boat.

At the sides of the line there is a perforated metallic band, with the perforations at regular intervals.

These perforations are "read" by an encoder mounted on to the boat, and this permits the control computer for the apparatus to know, moment by moment , the exact position along the line of each boat and the single cells mounted on them. A tachometric dynamo 35 linked to the towing motor 26 allows one to verify that the forward velocity of the boat corresponds to that expected.

Every time a parcel is introduced into a cell, the central computer ensures it is positioned at the height corresponding to the appropriate loading device. The deviators 21 and 23 act to this end.

Of these, deviator 23 serves to command the cell descent, while those that follow control the extent of this movement. Maintaining indeed all the deviators in a horizontal postion, aligned with the sections 20 of the rail above, the wheel 19 and therefore the axle 17 remain in the position illustrated in figure 6, in which the pivot 16 engages the cam 15 of the winch 14 keeping it blocked.

On the other hand when a cell must be carried to a lower height, this is done with deviator 23, carrying it into the position inclined downwards in figure 3.

In this position wheel 19, engaged by the deviator, is shifted upwards and runs along the upper rail 20. This causes a rotation of the axle 17 which shifts the pivot 16 disengaging thereby the cam 15 of the winch.

The weight of the cell, superior to the force exercised by the spring 28, makes it therefore run downwards, moving along the inclined guide 25. The descent of the cell continues until the wheel 19 meets a deviator 21 in an operating position inclined upwards.

The deviator 21 conducts the wheel 19 back to the preceding position, into contact with the rail 1. The pivot 16 also returns to the initial position, intercepting the cam 15 and thereby blocking the winch and the descent of the cell.

Obviously the length of the sections 20 of the upper rail are calculated with regard to the different heights at which the the parcels are to be unloaded.

Appropriately preselecting therefore the correct deviator 21 , it will be possible to regulate the descent of the cell according to a discrete number of intervals. Varying the number and the position of the cams fixed to the winch, it will also be possible, in case of necessity, to block the cells at different heights, always at discrete intervals and with the certainty of exact positioning, positioning which can also be verified by means of photocells or similar means appropriately arranged.

When the boat passes by the unloading area, the central computer commands the rotation of the mat 9, in one direction or another, in order to execute the unloading of the parcel.

At the bottom of the unloading area the cell reaches the reascent mechanism where the rotating belt 26 carries the cell back upwards, while the spring 28 procedes to rewind the thread on to the winch 14, taking it back to a height such that persons may pass under the cell, for easy access to the internal part of the unit, an access which is precluded or at any rate difficult in the known apparatuses. Obviously there will be, between cam 15 and the winch 14, a release switch which will permit the free rewinding of the steel cable 12 thereby impeding the descent until the cam is first liberated.

Alternatively, various other systems can be provided to conduct the cell upwards, for example electric motors mounted on the trollies.

Each boat will then be able to be equipped with mechanisms like a proximity sensor able to register the presence of obstacles or a slower-moving boat on the line, providing a signal which then slows the speed of forward movement.

With the type of unit above described numerous advantages are obtained.

It is indeed possible to reach a very high number of stations with a limited cost structure, easy to install, light and adaptable even in places already constructed. Indeed concentrating the destinations of the sorting machine on more levels means a high density of exits per linear metre of machine.

This is due to the fact that the pantograph to which the cells are connected can be sized so as to allow sorting on a high number of variable levels. The unit is also easily accessible from whichever side, permitting correct and convenient maintenance.

An expert in this field will be able to offer numerous modifications and variations, which must, however, keep within the limits of the present claims.

## Claims

1. A unit supported above a floor for the sorting of packages, of the type comprising:
a rail line (1) arranged in a fixed path above the floor;
a large amount of trolleys mounted for movement along the rail line;
a cell, for supporting and transferring packages, attached to the trolley by telescopic support means (8), the telescopic support means fixed between the cell (9, 10, 11) and the trolley and connected to the control means, the telescopic support means positioning the cell at various heights;
loading/unloading means (10) located on the cell for receiving and unloading the packages;
a loading station (2) located at a first position near the rail line at a load station level for moving packages from the load station to the loading/unloading means (10) of the cell at the load station level;
collection mechanisms (3) located at a second position near the rail line at a collection level for receiving packages from the loading/unloading means of the cell at the collection level;
a plurality of deviators (21, 23) positioned along the rail line at predetermined positions, the deviators contacting the trolley as the trolley moves along the rail line, causing the cell to move to a discharge position, characterised in that the cell is attached below the trolley, the operation of said deviators (21, 23) causing the cell to descent to said discharge position, and
that the cell descent movement occurs by way of gravity, there being means employed so as to return the cell to a higher position after the package has been unloaded.

2. A unit for the sorting of packages according to claims 1 characterised by the fact of providing an ascent mechanism (26) located at the rail line and extending downwardly to the collection level wherein the ascent mechanism assists in moving the cell after the cell is unloaded at the collection level of the collection mechanism, the cell being moved upwardly along the ascent mechanism toward the rail line (1).

3. A unit for sorting packages according to claims 1 to 2, characterised in that the loading/unloading means comprising a rotating mat (10) powered by a cell motor (11), the cell motor located on the cell, the rotating mat causing the packages to be moved into and out of the cell.

4. The unit according to claims 1 to 3, characterised in that the telescopic support means (8) comprises a winch (14) fixed to the trolley by a cam, a cable (12) for winding and unwinding on the winch, the cable having one end attached at the winch and an opposite end fixed to the cell such that when the cable is wound around the winch the cell is pulled upward toward the trolley, the cam being rotatable with the winch, the rotation of the winch fixed to the cam being effected by a winch blocking means (16) located on the trolley which is engageable with the cam, the winch blocking means being activated by contact with the deviators (21, 23) on the rail line such that when the winch blocking means engages the cam, rotation of the winch is stopped and when the winch blocking means is disengaged from the cam, winch rotation resumes.

5. The unit according to the preceeding claims, characterised in that the winch blocking means comprises a movable pivot (16) which engages the cam for blocking rotation of the winch, the pivot connected to an axle (17) mounted on the trolley, the axle having an arm (18) extending from the axle, the arm having a wheel (19), the wheel rotatably moveable along the rail, the pivot being moved into contact with the cam upon the wheel contacting the deviator (21, 23) positioned on the rail.

6. The unit according to the preceeding claims, characterised in that the cell ascent mechanism comprises a rotating belt (26) inclined at a position below the rail line, the rotating belt engaging the cell after the unloading of packages at the collection level or the collection mechanism and moving the cell upwardly along the rotating belt toward the rail line, through the use of a belt motor.

7. The unit according to claim 1, characterised in that the collection mechanism comprises a plurality of chutes (7, 7′...) the chutes located at spaced collection levels below the rail line, the chutes being positioned for receiving packages from the rotating mat of the cell at the collection level.

8. The unit according to claim 1, characterised in that a guide tract (25) is connected below the rail line and supported by the floor, the guide tract being oriented at a downward angle and extending downwardly to the collection mechanism, the guide tract being for receiving and guiding the cell as the cell descends toward the collection mechanism.

## Patentansprüche

1. Einrichtung zum Sortieren von Stückgut, die oberhalb eines Bodens gehalten ist;
mit einem über dem Boden in einem festgelegten Pfad angeordneten Schienenweg (1);
mit einer großen Anzahl von Wagen, die zur Bewegung entlang des Schienenweges angeordnet sind;
mit einer durch teleskopische Tragmittel (8) mit dem Wagen verbundenen Zelle zum Tragen und Transferieren von Stückgut, wobei die teleskopischen Tragmittel zwischen der Zelle (9, 10, 11) und dem Wagen festgelegt und mit den Steuerungsmitteln verbunden sind, und wobei die teleskopischen Tragmittel die Zelle in verschiedenen Höhen positionieren;
mit Belade/Entlademitteln (10), die sich zum Empfangen und Entladen der Stückgutteile an der Zelle befinden;
mit einer sich an einer ersten Position in der Nähe des Schienenweges auf einem Beladestation-Niveau befindenden Beladestation (2) zum Bewegen von Stückgutteilen von der Beladestation zu den Belade/Entlademitteln (10) der Zelle auf dem Beladestation-Niveau;
mit sich an einer zweiten Position in der Nähe des Schienenweges auf einem Sammel-Niveau befindenden Sammelvorrichtungen (3) zum empfangen von Stückgutteilen von den Belade/Entlademitteln der Zelle auf dem Sammel-Niveau;
mit einer Mehrzahl von entlang des Schienenweges in vorbestimmten Positionen positionierten Deviatoren (21, 23), die mit dem Wagen in Kontakt gelangen, wenn sich der Wagen entlang des Schienenweges bewegt, und die die Zelle veranlassen, sich in eine Entladeposition zu bewegen,
dadurch gekennzeichnet,
daß die Zelle unterhalb des Wagens angebracht ist, wobei die Tätigkeit der besagten Deviatoren (21, 23) die Zelle veranlaßt, zu besagter Entladeposition abzusinken, und daß die Absinkbewegung der Zelle schwerkraftbedingt erfolgt, wobei Mittel vorgesehen sind, um die Zelle zu einer höheren Position zurückzubringen, nachdem das Stückgutteil entladen worden ist.

2. Einrichtung zum Sortieren von Stückgut nach Anspruch 1, dadurch gekennzeichnet, daß eine am Schienenweg befindliche, sich abwärts zu dem Sammel-Niveau erstreckende Hebevorrichtung (26) vorgesehen ist, die beim Bewegen der Zelle hilft, nachdem die Zelle auf dem Sammel-Niveau der Sammelvorrichtung entladen worden ist, wobei die Zelle entlang der Hebevorrichtung aufwärts zum Schienenweg (1) bewegt wird.

3. Einrichtung zum Sortieren von Stückgut nach Anspruch 1 bis 2, dadurch gekennzeichnet, daß die Belade/Entlademittel eine von einem Zellen-Motor (11) angetriebene rotierende Unterlage (10) umfassen, wobei sich der Zellen-Motor an der Zelle befindet, und wobei die rotierende Unterlage verursacht, daß das Stückgut in die und aus der Zelle bewegt wird.

4. Einrichtung nach den Ansprüchen 1 bis 3, dadurch gekennzeichnet, daß das teleskopische Tragmittel (8) eine über einen Nocken an dem Wagen festgelegte Winde (14) umfaßt, an der ein auf- und abwickelbares Kabel (12) vorgesehen ist, wobei ein Ende des Kabels an der Winde befestigt ist und ein entgegengesetztes Ende an der Zelle befestigt ist, so daß die Zelle nach oben zum Wagen gezogen wird, wenn das Kabel um die Winde gewickelt wird, wobei der Nocken mit der Winde drehbar ist und die Rotation der mit dem Nocken fest verbundenen Winde durch ein an dem Wagen vorgesehenes Windenblockiermittel (16) bewirkt wird, das mit dem Nocken zusammenarbeiten kann und das durch Kontakt mit den Deviatoren (21, 23) am Schienenweg betätigt wird, so daß die Rotation der Winde gestoppt wird, wenn das Windenblockiermittel (16) mit dem Nocken zusammenarbeitet, und die Windenrotation wieder aufgenommen wird, wenn das Windenblockiermittel (16) außer Eingriff mit dem Nocken gebracht wird.

5. Einrichtung nach den vorhergehenden Ansprüchen, dadurch gekennzeichnet, daß das Windenblockiermittel einen beweglichen Zapfen (16) umfaßt, der den Nocken zum Blockieren der Windenrotation beaufschlagt, und der mit einer an dem Wagen angebrachten Achse (17) verbunden ist, die einen von der Achse abstehenden Arm (18) hat, der ein Rad (19) aufweist, das entlang der Schiene rotierend bewegt ist, wobei der Zapfen in Kontakt mit dem Nocken verbracht wird, wenn das Rad mit dem auf der Schiene positionierten Deviator (21, 23) in Kontakt gelangt.

6. Einrichtung nach einem der vorhergehenden Ansprüche, dadurch gekennzeichnet, daß die Zellen-Hebevorrichtung ein rotierendes Band (26) umfaßt, das an einer Stelle unterhalb des Schienenweges geneigt ist, und das an der Zelle nach dem Entladen von Stückgut auf dem Sammel-Niveau oder an der Sammelvorrichtung angreift und die Zelle unter Verwendung eines Band-Motors entlang des rotierenden Bandes zum Schienenweg aufwärts bewegt.

7. Einrichtung nach Anspruch 1, dadurch gekennzeichnet, daß die Sammelvorrichtung eine Mehrzahl von Rutschen (7, 7′ ...) umfaßt, die auf beabstandeten Sammel-Niveaus unter dem Schienenweg angeordnet sind, und die zum Empfangen von Stückgut von der rotierenden Unterlage der Zelle auf dem Sammel-Niveau positioniert sind.

8. Einrichtung nach Anspruch 1, dadurch gekennzeichnet, daß eine Führungsstrecke unter dem Schienenweg verbunden und vom Boden getragen ist, die in einem Abwärtswinkel ausgerichtet ist und sich nach unten zur Sammelvorrichtung erstreckt, und die zur Aufnahme und Führung der Zelle dient, wenn die Zelle zur Sammelvorrichtung absinkt.

## Revendications

1. Unité supportée au-dessus d'un plancher pour trier des paquets, du type comprenant :
une voie (1) composée de rails, agencée selon un trajet fixe au-dessus du plancher ;
un grand nombre de chariots montés pour circuler le long de la voie ;
une cellule servant à supporter et transférer des paquets, fixée au chariot par des moyens supports télescopiques (8), les moyens supports télescopiques étant fixés entre la cellule (9, 10, 11) et le chariot et étant reliés aux moyens de commande, les moyens supports télescopiques positionnant la cellule à différentes hauteurs,
des moyens de chargement/dechargement (10) placés sur la cellule pour recevoir et décharger les paquets ;
un poste de chargement (2) placé à une première position proche de la voie, à un niveau de poste de chargement, pour faire passer les paquets du poste de chargement aux moyens de chargement/déchargement (10) de la cellule au niveau du poste de chargement ;
des mécanismes collecteurs (3) placés dans une deuxième position proche de la voie, à un niveau de réception pour recevoir les paquets en provenance des moyens de chargement/déchargement de la cellule au niveau de réception ;
une pluralité de déflecteurs (21, 23) positionnés le long de la voie dans des positions prédéterminées, les déflecteurs entrant en contact avec le chariot lorsque le chariot circule le long de la voie, en amenant à la cellule à se placer dans une position de déchargement, caractérisée en ce que la cellule est attachée au-dessous du chariot, la manoeuvre desdits déflecteurs (21, 23) faisant descendre la cellule à ladite position de déchargement ; et en ce que le mouvement de descente de la cellule se produit par gravité, cependant qu'il est prévu des moyens servant à ramener la cellule à une position plus haute après que le paquet a été déchargé.

2. Unité pour trier des paquets selon la revendication 1, caractérisée en ce qu'elle comprend un mécanisme élévateur (26) placé au droit de la voie et qui s'étend vers le bas jusqu'au niveau de réception, dans laquelle le mécanisme élévateur assiste le déplacement de la cellule, après que la cellule a été déchargée, au niveau de réception du mécanisme collecteur, la cellule remontant vers la voie (1) le long du mécanisme élévateur.

3. Unité pour trier des paquets selon les revendications 1 et 2, caractérisée en ce que les moyens de chargement/déchargement comprennent une bande transporteuse (10) mue par un moteur (11) de la cellule, le moteur de la cellule étant monté sur la cellule, la bande transporteuse faisant entrer les paquets dans la cellule et les en faisant sortir.

4. Unité selon les revendications 1 à 3, caractérisée en ce que les moyens supports télescopiques (8) comprennent un treuil (14) bloqué par rapport au chariot par une came, un câble (12) destiné à s'enrouler et à se dérouler sur le treuil, le câble ayant une extrémité fixée au treuil et une extrémité opposée fixée à la cellule de telle manière que, lorsque le câble s'enroule autour du treuil, la cellule soit tirée vers le haut, vers le chariot, la came tournant avec le treuil, le blocage de la rotation du treuil par la came étant exécuté par un moyen (16) de blocage du treuil placé sur le chariot, qui peut être mis en prise avec la came, le moyen de blocage du treuil étant activé par contact avec les déflecteurs (21, 23) prévus sur la voie, de telle manière que la rotation du treuil soit arrêtée lorsque le moyen de blocage du treuil arrête la came et que la rotation du treuil reprenne lorsque le moyen de blocage du treuil est dégagé de la came.

5. Unité selon les revendications précédentes, caractérisée en ce que le moyen de blocage du treuil comprend un doigt mobile (16) qui arrête la came pour bloquer la rotation du treuil, le doigt ayant fixé à un axe (17) monté sur le chariot, l'axe possédant un bras (18) qui fait saillie sur l'axe, le bras portant une roulette (19), la roulette pouvant rouler le long du rail, le doigt étant mis en contact avec la came lorsque la roulette entre en contact avec le déflecteur (21, 23) positionné sur le rail.

6. Unité selon les revendications précédentes, caractérisée en ce que le mécanisme élévateur des cellules comprend une courroie circulante (26) inclinée dans une position située au-dessous de la voie, la courroie circulante attaquant la cellule après le déchargement des paquets au niveau de réception ou du mécanisme collecteur, et faisant monter la cellule le long de la courroie circulante en direction de la voie, à l'aide d'un moteur de la courroie.

7. Unité selon la revendication 1, caractérisée en ce que le mécanisme collecteur comprend une pluralité de goulottes (7, 7′ ...), les goulottes étant placées à des niveaux de réception espacés au-dessous de la voie, les goulottes étant positionnées pour recevoir les paquets de la bande transporteuse de la cellule placée au niveau de réception.

8. Unité selon la revendication 1, caractérisée en ce qu'un segment de guidage (25) est monté sous la voie et supporté par le plancher, le segment de guidage étant orienté selon un angle descendant et s'étendant vers le bas jusqu'au mécanisme collecteur, le segment de guidage étant destiné à recevoir et guider la cellule lorsque la cellule descend vers le mécanisme collecteur.
